# EUROPÄISCHE PATENTSCHRIFT

(11) **EP 1 146 257 B1**
(45) Veröffentlichungstag und Bekanntmachung des Hinweises auf die Patenterteilung: **15.03.2006**
(21) Anmeldenummer: 01107064.6
(22) Anmeldetag: 21.03.2001
(51) Int. Cl.: F16H 61/02, F16H 59/02, B60K 20/06, F16H 63/42

(54) **Vorrichtung zur Auswahl einer Fahrstufe oder Gangstufe eines Kraftfahrzeuggetriebes**
Device for selection of a transmission range or gear for an automotive vehicle transmission
Dispositif de sélection de gamme de vitesse ou de vitesse pour transmission des véhicules automobiles

(30) Priorität: 14.04.2000 DE 10018661
(43) Veröffentlichungstag der Anmeldung: 17.10.2001
(73) Patentinhaber: SIEMENS AKTIENGESELLSCHAFT, 80333 München (DE)
(72) Erfinder: Loibl, Josef, 94209 Regen (DE)

(56) Entgegenhaltungen:
- EP-A- 0 416 227
- EP-A- 0 870 955
- DE-A- 4 033 574
- DE-A- 19 747 269
- FR-A- 2 699 978

## Beschreibung

In der Getriebetechnik für Kraftfahrzeuge werden die rein mechanischen Handschaltgetriebe zunehmend durch automatisierte Handschaltgetriebe ersetzt. Hierbei entfällt die mechanische Verbindung zwischen dem, üblicherweise im Bereich der Mittelkonsole angeordneten Wählhebel und dem Getriebe. Statt dessen wird der Fahrerwunsch über Sensoren erfasst und über eine elektrische Verbindung zu einer Getriebesteuerung übertragen, welche die Gang- und Kupplungssteuerung übernimmt. Derartige Getriebesysteme werden häufig auch als "Shift-by-wire"-Systeme bezeichnet. Ein ähnlicher Trend ist auch für Automatikgetriebe, die als Stufengetriebe mit Planetenradsatz oder als stufenlose Getriebe (CVT) ausgeführt sein können, zu erkennen.

Bei heute üblichen Kraftfahrzeugen mit Automatikgetriebe wird der Fahrerwunsch bezüglich der Fahrstufe ausschließlich über Wählhebelmodule vorgegeben, die die Stellungen P (Park), R (Reverse), N (Neutral) und D (Drive) rastend schalten. Vielfach ist zusätzlich eine manuelle Schaltgasse vorgesehen, um den Automatikmodus zu verlassen und durch eine Vorwärts/Rückwärts- oder eine Links-/Rechts-Bewegung am Wählhebel eine manuelle Hoch- beziehungsweise Rückschaltung zu bewirken.

Eine bekannte eine Wähleinrichtung mit einer Anzeigeeinrichtung für ein Kraftfahrzeuggetriebe (EP-A-0 870 955) zeigt die dem Fahrer die Wählrichtung für die gewünschte Fahrstufe an, ermöglicht es ihm aber auch, diese ohne auf die Anzeige zu schauen einfach zu finden. Das heißt, der Fahrer kann damit lernen, welche der sechs Bewegungsrichtungen, in die er den Wählhebel verschwenken kann, jeweils die seinem Schaltwunsch zugeordnete die richtige ist, und zwar auch ohne auf den Wählhebel zu schauen.

Bekannt ist auch eine gattungshildende Steuervorrichtung (FR-A-2 699 978) für ein automatisches Kraftfahrzeuggetriebe, mit dem einem Fahrer ermöglicht wird, das bei der Herstellung des Kraftfahrzeugs einprogrammierte Schaltverhalten zu verändern und an seinen Fahrstil oder seine Wünsche anzupassen. Mit einem neben dem konventionellen Wählhebel vorgesehenen Kippschalter kann der Fahrer einen Lernmodus für die Getriebesteuerung eröffnen, in dem die Gangwechsel des Getriebes von dem Fahrer manuell über zwei Tipptasten auf dem Lenkrad gesteuert werden. Diese Schaltvorgänge werden gespeichert und dienen - nachdem der Lernmodus wieder verlassen worden ist - als fahrerindividuelles Schaltprogramm für die Getriebesteuerung, das jederzeit auf Wunsch aufgerufen werden kann.

Ein bekanntes Kraftfahrzeugsteuersystem (DE 40 33 574 A) ermöglicht dem Fahrer das Ändern von Vorgabewerten oder Betriebscharakteristiken, wozu ein überschreibbarer Speicher vorgesehen ist, in dem Daten bezüglich der Steuercharakteristiken einschließlich Vorgabewerte gespeichert sind. Die Inhalte der gespeicherten Steuercharakteristiken sind entsprechend den Befehlen vom Fahrer überschreibbar. Der Speicherbereich des Speichers ist in kleinere Bereiche unterteilt, von denen jeweils einer für jeden Fahrer vorgesehen ist. Eine Fahrererkennungseinheit kann für jeden Fahrer einen Speicherbereich ansteuern.

Da die Verwendung der üblichen Wählhebemodule zu enormem Platzbedarf im Bereich der Mittelkonsole eines Kraftfahrzeugs führt, liegt der Erfindung die Aufgabe zugrunde, eine Vorrichtung zur Auswahl der Fahrstufe eines Kraftfahrzeuggetriebes zu schaffen, die zumindest die Funktion eines heute üblichen Wählhebelmoduls übernimmt, dabei aber einen deutlich geringeren Platzbedarf aufweist. Außerdem soll ein Verfahren zum Steuern der Vorrichtung angegeben werden.

Diese Aufgabe wird durch eine Vorrichtung mit den Merkmalen des Patentanspruchs 1 gelöst und durch ein Verfahren mit den Merkmalen des Patentanspruchs 7 gelöst. Vorteilhafte Weiterbildungen sind in den Unteransprüchen niedergelegt.

Die erfindungsgemäße Vorrichtung weist mindestens zwei Bedienelemente in Form von Tipptasten zum Wechseln in jede mögliche Fahrstufe und Gangstufe auf. Abhängig von der aktuellen Fahr- oder Gangstufe und der aktuellen Fahrsituation werden den Bedienelementen durch ein Steuergerät Funktionen zugewiesen. Beiden Bedienelementen ist jeweils eine Funktionsanzeige zugeordnet, über dem Fahrer die aktuellen Funktionen der Bedienelemente angezeigt werden. Im Vergleich zu einem heute üblichen Wählhebelmodul ist eine derartige Lösung wesentlich preisgünstiger und deutlich platzsparender. Die Bedienelemente können beispielsweise als Tipptasten auf dem Lenkrad oder als Schalthebel an der Lenksäule ausgeführt sein, so dass kein zusätzlicher Platzbedarf im Bereich der Mittelkonsole entsteht. Durch Anordnung der Bedienelemente im Bereich des Lenkrades muss der Fahrer das Lenkrad zum Wechseln der Fahrstufe nicht mehr loslassen, wodurch die Fahrsicherheit erheblich verbessert wird.

Ein Ausführungsbeispiel der Erfindung ist im Folgenden anhand der Figuren erläutert. Es zeigen:

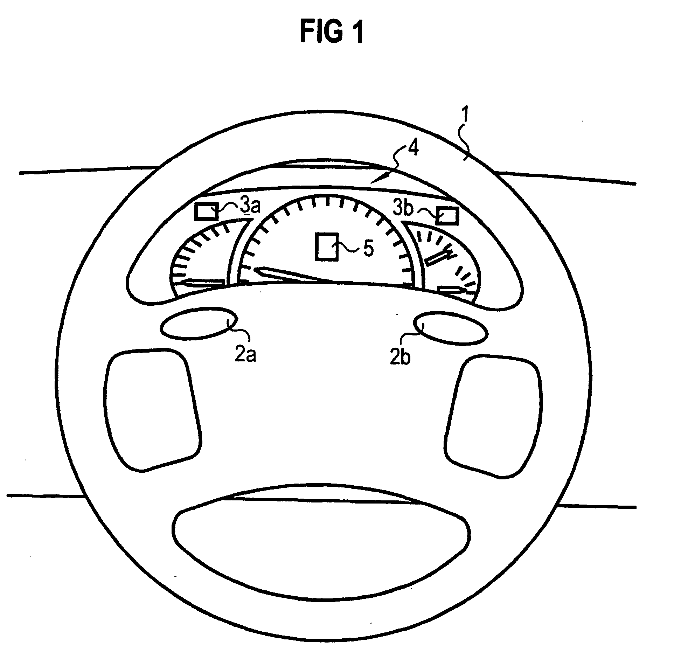

- Figur 1: eine schematische Darstellung eines Fahrzeugcockpits mit Lenkrad und Instrumentenfeld,
- Figur 2: ein Zustandsübergangsdiagramm einer ersten Ausführungsform der erfindungsgemäßen Vorrichtung und
- Figur 3: ein Zustandsübergangsdiagramm einer zweiten Ausführungsform der erfindungsgemäßen Vorrichtung.

In das Lenkrad 1 eines Kraftfahrzeugs sind zwei Bedienelemente 2a und 2b, z.B. in Form von Tipptasten, integriert. Durch Betätigen dieser Bedienelemente 2a, 2b hat der Fahrer die Möglichkeit, die eingestellte Fahrstufe oder in einem manuellen Modus die eingelegte Gangstufe zu wechseln. Alternativ können die Bedienelemente 2a, 2b beispielsweise auch in Form von Schalthebeln an der Lenksäule angeordnet sein. Über Funktionsanzeigen 3a und 3b, die vorzugsweise im Bereich des Instrumentenfeldes 4 des Kraftfahrzeugs angeordnet sind, wird dem Fahrer in Form einer optischen Anzeige eine Information über die aktuelle Funktion der Bedienelemente 2a bzw. 2b gegeben. Vorteilhaft wird dem Fahrer auch die aktuell eingestellte Fahrstufe oder Gangstufe über eine Fahrstufenanzeige 5 angezeigt. Die Informationen über die Funktion der Bedienelemente 2a, 2b und gegebenenfalls die momentan eingestellte Fahr- oder Gangstufe können dabei, wie in der Figur dargestellt, in getrennten Anzeigefeldern (Displays) oder auch in einem gemeinsamen Anzeigefeld angezeigt werden. Wichtig ist lediglich , dass der Fahrer eine eindeutige Information zumindest über die aktuelle Funktionsbelegung der beiden Bedienelemente 2a, 2b erhält. Bei getrennten Anzeigefeldern ist es daher aus ergonomischen Gründen vorteilhaft, die Position des jeweiligen Anzeigefeldes an die Lage des zugehörigen Bedienelements anzupassen, also z.B. dem rechten Bedienelement ein Anzeigefeld im rechten Teil des Instrumentenfeldes zuzuordnen. Bei Ausführungsformen mit Bedienelementen, die in das Lenkrad integriert sind, sind die Funktionsanzeigen vorteilhaft ebenfalls in das Lenkrad integriert, insbesondere auf den Bedienelementen angeordnet. Durch Integration der Funktionsanzeigen in das Lenkrad ist eine Zuordnung der Anzeige zu dem entsprechenden mit dem Lenkrad bewegten Bedienelement auch bei Lenkeinschlägen im Bereich von 180° zweifelsfrei möglich. Durch Auswerten des Lenkwinkels kann die Anzeige in den Anzeigefeldern zusätzlich dem Lenkwinkel angepasst werden und derart gekippt werden, dass ein Ablesen auch bei verdrehtem Lenkrad problemlos möglich ist.

Erfindungsgemäß wird den Bedienelementen 2a, 2b abhängig vom aktuellen Fahrzustand, also einerseits von der aktuellen Fahrsituation und andererseits von der aktuell eingelegten Fahr- oder Gangstufe jeweils eine Funktion zugewiesen und dem Fahrer über die Funktionsanzeigen 3a, 3b eine Rückmeldung über die aktuelle Funktionsbelegung der Bedienelemente 2a, 2b gegeben. Die Bedienelemente 2a, 2b und Funktionsanzeigen 3a, 3b - gegebenenfalls auch die Fahrstufenanzeige 5 - werden dabei durch ein Steuergerät gesteuert. Um den Aufwand für ein zusätzliches separates Steuergerät zu vermeiden, kann die erforderliche Steuerlogik in ein standardmäßig in Kraftfahrzeugen vorhandenes Steuergerät, insbesondere in die Getriebesteuerung, integriert werden. Die für die Steuerung notwendigen Daten werden vorteilhaft über ein fahrzeugeigenes BusSystem, z.B. über CAN-Bus, übertragen.

Im folgenden ist beispielhaft eine Auflistung von Funktionen der Bedienelemente 2a, 2b in Abhängigkeit vom aktuellen Fahrzustand aufgeführt. Dabei ist jedem Fahrzustand 0 bis 10 eine aktuelle Fahrsituation und eine aktuelle Fahrstufe zugeordnet.

### Fahrzustand 0 - Startphase (Fahrsituation)/Park-Betrieb P (Fahrstufe):

Ist der Park-Betrieb eingestellt und wird die Zündung eingeschaltet, sind die Bedienelemente 2a, 2b zunächst mit keiner Funktion belegt, das heißt ein Betätigen der Bedienelemente 2a, 2b hat keine Wirkung. Dem Fahrer kann zumindest über eine der Funktionsanzeigen 3a, 3b oder gegebenenfalls über die Fahrzustandsanzeige 5 ein Hinweis ausgegeben werden, dass zunächst die Betriebsbremse über das entsprechende Fußpedal betätigt werden muss, bevor eine neue Fahrstufe ausgewählt werden kann.

### Fahrzustand 1 - Anfahrphase/Park-Betrieb P:

Nach Betätigen der Betriebsbremse kann durch Betätigen von einem der beiden Bedienelemente 2a, 2b in den Reverse-Betrieb (Rückwärtsfahrt) und bei Betätigen des anderen Bedienelements 2a oder 2b in den Drive-Betrieb (Vorwärtsfahrt /Automatik-Modus) gewechselt werden. Diese Funktion der Bedienelemente 2a und 2b wird dem Fahrer über die entsprechende Funktionsanzeige 3a bzw. 3b angezeigt. Diese Funktions-Anzeige gilt entsprechend für alle folgenden Fahrzustände und ist deshalb nicht jedes mal im einzelnen aufgeführt.

Durch die beschriebene Funktionsbelegung der Bedienelemente 2a, 2b in den Fahrzuständen 1 und 2 wird auf einfache Weise die Funktion einer Park-Sperre (shift-lock) realisiert. Derartige Park-Sperr-Funktionen, die einen Wechsel der Fahrstufe aus dem Park-Betrieb nur dann zulassen, wenn die Betriebsbremse betätigt ist, sind bei Automatikgetrieben mit mechanischen Wählhebeln seit vielen Jahren Stand der Technik. Die Realisierung dieser Funktion ist jedoch bei herkömmlichen Systemen äußerst aufwendig.

### Fahrzustand 2 - Vorwärtsfahrt/Drive-Betrieb D:

Eines der Bedienelemente 2a, 2b dient zum Wechsel in den Manuellen Modus M während das andere einen Wechsel in den Neutral-Modus N ermöglicht.

### Fahrzustand 3 - Rückwärtsfahrt/Reverse-Betrieb R:

Durch Betätigen von mindestens einem der Bedienelemente 2a, 2b kann in den Neutral-Betrieb N gewechselt werden. Das andere Bedienelement 2a oder 2b ist entweder mit keiner Funktion belegt oder führt ebenfalls zu einem Wechsel in den Neutral-Betrieb N.

### Fahrzustand 4 - Vorwärtsfahrt/Manueller Modus M:

Durch Betätigen von jeweils einem der beiden Bedienelemente 2a, 2b kann die aktuelle Gangstufe um eine Stufe erhöht bzw. erniedrigt werden. Ist eine Fahrstufenanzeige vorgesehen, wird dem Fahrer im manuellen Modus die aktuelle Gangstufe, beispielsweise eine der Gangstufen 1 bis 6 bei einem Sechsgang-Getriebe, angezeigt. Um aus dem manuellen Modus M in den Automatik-Modus zurückzukehren sind mehrere Alternativen denkbar:
a) Die Bedienelemente 2a, 2b sind derart gesteuert, dass bei außerordentlicher Betätigung, z. B. längere Betätigungszeit oder kurz aufeinanderfolgende doppelte Betätigung von einem der Bedienelemente 2a, 2b einen Wechsel in den Neutral-Betrieb N und eine Betätigung des anderen Bedienelements 2a oder 2b einen Wechsel in den Drive-Betrieb D bewirkt.
b) Die Bedienelemente 2a, 2b sind derart gesteuert, dass ein Betätigen der Bedienelemente 2a, 2b nur bei eingelegter niedrigster oder höchster Gangstufe zu einem Wechsel in den Neutral-Betrieb bzw. den Drive-Betrieb bewirkt.
c) Abhängig von verschieden Fahrparametern und/oder Fahrsituationen wird durch das Steuergerät, vorzugsweise die Getriebesteuerung, ein selbsttätiger Wechsel vom manuellen Modus in den Automatik-Modus veranlasst. Derartige "intelligente" Systeme sind beispielsweise aus der Druckschrift DE 197 36 406 A1 bekannt.

### Fahrzustand 5 - Neutral-Betrieb N bei vorwärts rollendem Fahrzeug:

Die Betätigung von zumindest einem der Bedienelemente 2a, 2b führt zu einem Wechsel in den Drive-Betrieb D. Dem zweiten Bedienelement ist entweder keine Funktion zugeordnet oder die Betätigung des selben führt ebenfalls zu einem Wechsel in den Drive-Betrieb D. Denkbar ist auch eine Funktionsbelegung des zweiten Bedienelements derart, dass eine Betätigung zu einem Wechsel in den manuellen Modus M führt.

### Fahrzustand 6 - Neutral-Betrieb bei N rückwärts rollendem Fahrzeug:

Die Betätigung von zumindest einem der Bedienelemente 2a, 2b führt zu einem Wechsel in den Reverse-Betrieb R. Dem zweiten Bedienelement ist entweder keine Funktion zugeordnet oder ebenfalls ein Wechsel in den Reverse-Betrieb R.

### Fahrzustand 7 - Neutral-Betrieb N bei stehendem Fahrzeug:

Die Betätigung von jeweils einem der Bedienelemente 2a, 2b bewirkt einen Wechsel in den Drive-Betrieb D bzw. in den Reverse-Betrieb R.

### Fahrzustand 8 - Drive-Betrieb D bei stehendem Fahrzeug:

Die Betätigung von jeweils einem der Bedienelemente 2a, 2b bewirkt einen Wechsel in den Neutral-Betrieb N bzw. in den Reverse-Betrieb R.

### Fahrzustand 9 - Reverse-Betrieb R bei stehendem Fahrzeug:

Die Betätigung von jeweils einem der Bedienelemente 2a, 2b bewirkt einen Wechsel in den Neutral-Betrieb N bzw. in den Drive-Betrieb D.

### Fahrzustand 10 - Abstellphase/unabhängig von der Fahrstufe:

Nach Ausschalten der Zündung sind den Bedienelementen 2a, 2b keine Funktionen zugeordnet. Die Funktionsanzeigen 3a, 3b und gegebenenfalls auch die Fahrzustandsanzeige 5 werden deaktiviert. Das Steuergerät veranlasst selbständig einen Wechsel in den Park-Betrieb P. Durch den automatischen Wechsel in den Park-Betrieb P kann auf einfache Weise eine Schlüssel-SperrFunktion realisiert werden, die ein Abziehen des Zündschlüssels nur im Park-Betrieb P erlaubt. Bei Systemen mit herkömmlichen mechanischen Wählhebeln ist eine derartige Funktion nur mit erheblichem Mehraufwand zu realisieren.

Eine bei herkömmlichen Systemen aufwendig realisierte R-P-Sperre, die verhindert, dass während der (Vorwärts-)Fahrt der Rückwärts- oder Park-Betrieb angewählt werden kann, ist bei der erfindungsgemäßen Vorrichtung auf triviale Weise dadurch gelöst, dass die entsprechende Fahrstufe dem Fahrer erst gar nicht angeboten wird.

Bei abgestelltem Motor kann zumindest eines der Bedienelemente 2a, 2b vorteilhaft zum Starten des Motors genutzt werden.

Auf diese Weise kann das heute übliche Zündschloss eingespart werden.

Auch ein Notfahrbetrieb bei Funktions-Ausfall von mindestens einem der Bedienelemente 2a, 2b ist durch die erfindungsgemäße Vorrichtung problemlos realisierbar. Bei Ausfall von nur einem der Bedienelemente 2a oder 2b wird dem Fahrer über die entsprechende Funktionsanzeige 3a oder 3b ein Hinweis auf den Ausfall gegeben. Das funktionsfähige Bedienelement 2a oder 2b bietet weiterhin die Möglichkeit, die Fahrstufe zu wechseln. Abhängig von der Fahrsituation kann die Fahrstufe durch mehrmaliges Betätigen des Bedienelements gegebenenfalls auch mehrmals gewechselt werden. Sind beide Bedienelemente 2a, 2b ausgefallen, wird dem Fahrer zumindest über eine der Funktionsanzeigen 3a, 3b oder gegebenenfalls über die Fahrzustandsanzeige 5 ein Hinweis auf den Systemausfall gegeben. Das Getriebe wechselt in einen Notlauf-Betrieb, der es dem Fahrer ermöglicht, zumindest die nächste Werkstätte zu erreichen. Ein Wechsel der Fahrstufe ist bei Funktionsausfall beider Bedienelemente 2a und 2b nicht mehr möglich. Durch einen derart realisierten Notfahrbetrieb ist aber dennoch eine hohe Verfügbarkeit des Fahrzeugs gewährleistet.

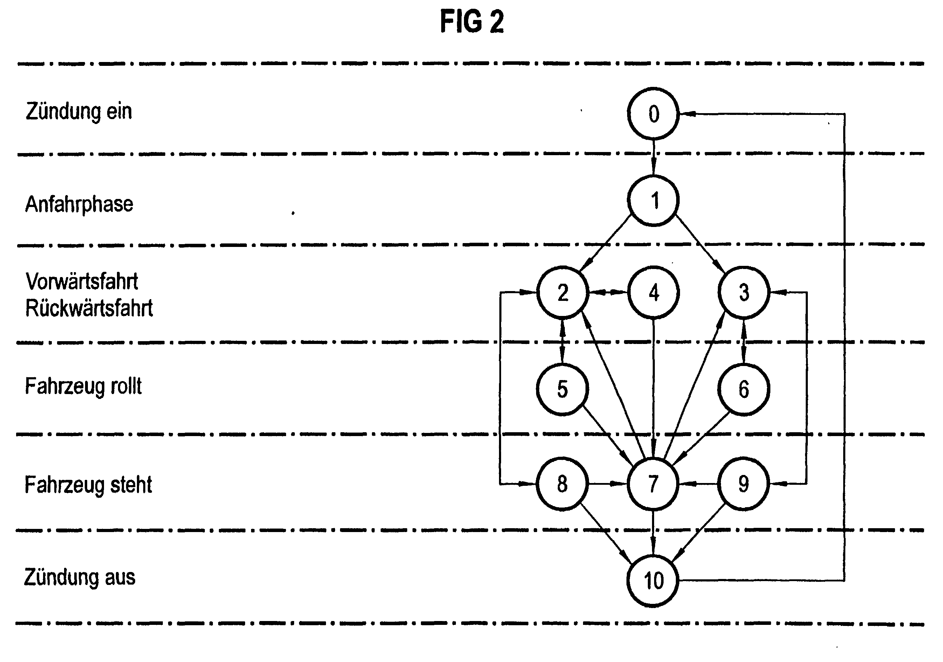

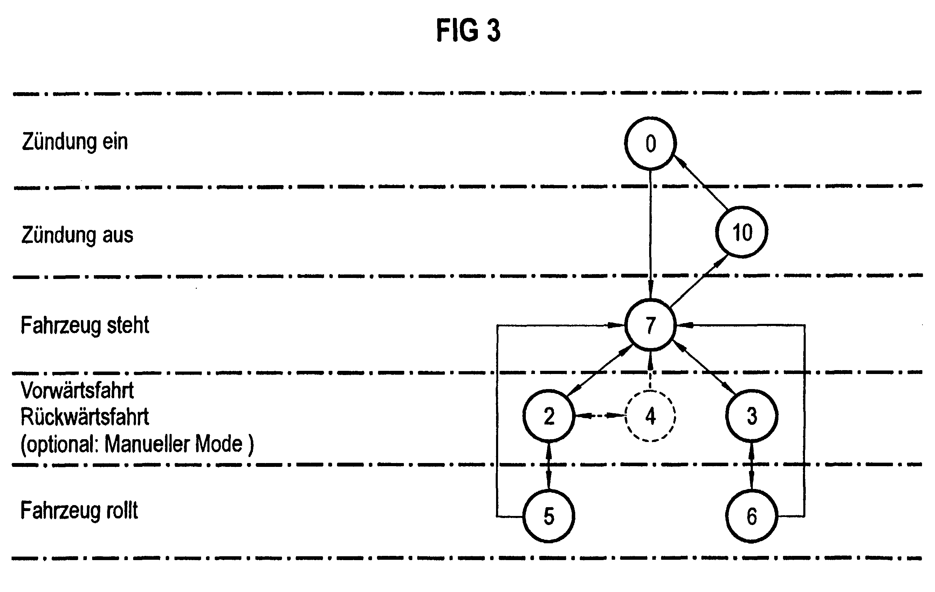

In den Figuren 2 und 3 sind zwei Zustandsübergangsdiagramme dargestellt, die beispielhaft die Wechselmöglichkeit der Fahrstufen in den einzelnen Fahrsituationen zeigen. Die Zahlen entsprechen dabei den oben aufgeführten Fahrzuständen. Selbstverständlich müssen nicht alle Wahlmöglichkeiten in einem Fahrzeug realisiert sein. In Figur 3 ist beispielsweise ein Zustandsdiagramm für eine Ausführungsform ohne manuellen Modus dargestellt. Durch gestrichelte Linien ist aber angedeutet, welche zusätzlichen Schaltmöglichkeiten sich durch einen manuellen Modus ergeben würden. Die vorhergehend beschriebene Funktionsbelegung der Bedienelemente 2a, 2b abhängig von der jeweiligen Fahrsituation ist lediglich beispielhaft zu sehen. In einigen Fahrsituationen bieten sich mehrere Alternativen für einen sinnvollen Wechsel der Fahrstufe an.

Beispielhaft ist in Figur 3 ein System gezeigt, bei dem im Fahrzeug-Stillstand automatisch der Neutral-Modus eingelegt wird. Eine entsprechende Anpassung der Funktionsbelegung der Bedienelemente 2a, 2b ist für den Fachmann auf einfache Art und Weise zu realisieren und daher hier nicht im einzelnen beschrieben.

Die erfindungsgemäße Vorrichtung und das erfindungsgemäße Verfahren zum Steuern der Vorrichtung wurden beispielhaft für ein Automatikgetriebe mit zusätzlichem manuellen Modus beschrieben. Selbstverständlich eignet sich die Vorrichtung und das Verfahren auch für den Einsatz bei Automatikgetrieben ohne manuellen Modus oder für automatisierte Handschaltgetriebe. Eine entsprechende Anpassung der Steuerung ist für einen Fachmann problemlos durchführbar.

## Patentansprüche

1. Vorrichtung zur Auswahl einer Fahrstufe oder Gangstufe bei einem Kraftfahrzeuggetriebe, die aufweist
- mindestens zwei Bedienelemente (2a; 2b) in Form von Tipptasten zum Wechseln in jede mögliche Fahrstufe und Gangstufe, wobei die Funktion der Bedienelemente (2a; 2b) abhängig von der momentanen Fahrsituation und der momentan eingelegten Fahrstufe festgelegt ist, **gekennzeichnet durch**
- mindestens zwei den Bedienelementen (2a; 2b) zugeordnete Funktionsanzeigen (3a; 3b) zum Anzeigen der momentanen Funktion der Bedienelemente (2a; 2b).

2. Vorrichtung nach Anspruch 1 **gekennzeichnet durch** eine Fahrstufenanzeige (5) zum Anzeigen der aktuell eingelegten Fahrstufe oder Gangstufe.

3. Vorrichtung nach Anspruch 1 oder 2, **dadurch gekennzeichnet, dass** die Bedienelemente (2a; 2b) im Bereich des Lenkrades (1) angeordnet sind.

4. Vorrichtung nach Anspruch 3, **dadurch gekennzeichnet, dass** die Bedienelemente (2a; 2b) in das Lenkrad (1) integriert sind.

5. Vorrichtung nach Anspruch 4, **dadurch gekennzeichnet, dass** die Funktionsanzeigen (3a; 3b) in das Lenkrad (1) integriert sind.

6. Vorrichtung nach einem der vorhergehenden Ansprüche, **dadurch gekennzeichnet, dass** die Bedienelemente (2a; 2b) von einer Getriebesteuerung gesteuert werden.

7. Verfahren zum Steuern einer Vorrichtung nach einem der Ansprüche 1 bis 6, **dadurch gekennzeichnet, dass** den Bedienelementen (2a; 2b) durch ein Steuergerät abhängig von der aktuellen Fahr- oder Gangstufe und der aktuellen Fahrsituation Funktionen zugeordnet werden.

8. Verfahren nach Anspruch 7 **dadurch gekennzeichnet, dass** den Bedienelementen (2a; 2b) im Park-Betrieb ohne Betätigung der Betriebsbremse keine Funktion zugeordnet wird.

9. Verfahren nach Anspruch 7 oder 8 **dadurch gekennzeichnet, dass** nach Ausschalten der Zündung automatisch in den Park-Betrieb gewechselt wird.

10. Verfahren nach einem der Ansprüche 7 bis 9 **dadurch gekennzeichnet, dass** bei abgestelltem Motor zumindest eines der Bedienelemente (2a; 2b) zum Starten des Motors dient.

## Revendications

1. Dispositif pour la sélection d'une vitesse ou d'un rapport dans une boîte de vitesses d'un véhicule automobile comprenant
au moins deux éléments de réglage (2a ; 2b) sous forme de touche à impulsion pour passer dans chaque vitesse ou rapport possible, la fonction des éléments de réglage (2a ; 2b) étant fixée en fonction de la situation de conduite courante et de la vitesse actuellement enclenchée,
**caractérisé par**
au moins deux indicateurs de fonction (3a ; 3b) affectés aux éléments de réglage (2a ; 2b) pour indiquer la fonction courante des éléments de réglage (2a ; 2b).

2. Dispositif selon la revendication 1, **caractérisé par** un indicateur de vitesse (5) pour signaler la vitesse ou le rapport actuellement enclenché.

3. Dispositif selon la revendication 1 ou 2, **caractérisé en ce que** les éléments de réglage (2a ; 2b) sont disposés dans la zone du volant (1).

4. Dispositif selon la revendication 3, **caractérisé en ce que** les éléments de réglage (2a ; 2b) sont intégrés dans le volant (1) .

5. Dispositif selon la revendication 4, **caractérisé en ce que** les indicateurs de fonction (3a ; 3b) sont intégrés dans le volant (1).

6. Dispositif selon l'une quelconques des revendications précédentes **caractérisé en ce que** les éléments de réglage (2a ; 2b) sont commandés par une commande de boîte de vitesses.

7. Procédé pour la commande d'un dispositif selon une des revendications 1 à 6, **caractérisé en ce que** des fonctions sont affectées aux éléments de réglage (2a ; 2b) par un organe de commande en fonction de la vitesse ou du rapport courant et de la situation de conduite courante.

8. Procédé selon la revendication 7, **caractérisé en ce qu'**aucune fonction n'est affectée aux éléments de réglage (2a ; 2b) dans un mode Park sans actionnement du frein de service.

9. Procédé selon la revendication 7 ou 8, **caractérisé en ce qu'**après l'arrêt d'allumage, on passe automatiquement en mode Park.

10. Procédé selon une des revendications 7 à 9, **caractérisé en ce que** lorsque le moteur est arrêté, au moins un des éléments de réglage (2a ; 2b) sert au démarrage du moteur.

## Claims

1. Device for selecting a transmission step or gear step in a motor vehicle gearbox, having
- at least two operating elements (2a; 2b) in the form of jog keys for changing into every possible transmission step and gear step, the function of the operating elements (2a; 2b) being dependent on the current driving situation and the currently engaged transmission step, **characterised by**
- at least two function displays (3a; 3b) assigned to the operating elements (2a; 2b) for displaying the current function of the operating elements (2a; 2b).

2. Device in accordance with claim 1, **characterised by** a transmission step display (5) for displaying the currently engaged transmission step or gear step.

3. Device in accordance with claim 1 or 2, **characterised in that** the operating elements (2a; 2b) are disposed in the area of the steering wheel (1).

4. Device in accordance with claim 3, **characterised in that** the operating elements (2a; 2b) are integrated into the steering wheel (1).

5. Device in accordance with claim 4, **characterised in that** the function displays (3a; 3b) are integrated into the steering wheel (1).

6. Device in accordance with one of the preceding claims, **characterised in that** the operating elements (2a; 2b) are controlled by a transmission control.

7. Method for controlling a device in accordance with one of claims 1 to 6, **characterised in that** functions are assigned to the operating elements (2a; 2b) by a control device as a function of the current transmission step or gear step and of the current driving situation.

8. Method in accordance with claim 7, **characterised in that** no functions are assigned to the operating elements (2a; 2b) in parking mode without actuation of the service brake.

9. Method in accordance with claim 7 or 8, **characterised in that** after the ignition has been switched off a change is automatically effected into parking mode.

10. Method in accordance with one of claims 7 to 9, **characterised in that** when the engine is switched off at least one of the operating elements (2a; 2b) is used to start the engine.
